Europäisches Patentamt

European Patent Office

Office européen des brevets

(19)

(11) EP 0 532 917 B1

(12) **EUROPÄISCHE PATENTSCHRIFT**

(45) Veröffentlichungstag und Bekanntmachung des Hinweises auf die Patenterteilung:
**10.04.1996 Patentblatt 1996/15**

(51) Int Cl.$^6$: **G01M 17/04**

(21) Anmeldenummer: **92113925.9**

(22) Anmeldetag: **14.08.1992**

(54) **Verfahren und Vorrichtung zur Prüfung der Fahrsicherheit eines Kraftfahrzeugs**

Method and device for testing the drive safety of a motor vehicle

Méthode et dispositif pour tester la sécurité de conduite d'un véhicule à moteur

(84) Benannte Vertragsstaaten:
**ES FR GB IT**

(30) Priorität: **18.09.1991 DE 4131006**

(43) Veröffentlichungstag der Anmeldung:
**24.03.1993 Patentblatt 1993/12**

(73) Patentinhaber: **HOFMANN WERKSTATT-TECHNIK GMBH D-64319 Pfungstadt (DE)**

(72) Erfinder:
- **Schiehlen, Werner, Prof. Dr. Ing.**
  **W-7030 Böblingen (DE)**
- **Humber, Kurt**
  **W-6103 Griesheim (DE)**

(74) Vertreter: **Nöth, Heinz, Dipl.-Phys. Patentanwalt, Mozartstrasse 17 D-80336 München (DE)**

(56) Entgegenhaltungen:
EP-A- 0 202 036          DE-A- 2 108 258
FR-A- 2 354 553          FR-A- 2 575 826
US-A- 4 002 051

**Beschreibung**

Die Erfindung betrifft ein Verfahren zur Prüfung der Fahrsicherheit von Kraftfahrzeugen nach dem Oberbegriff des Patentanspruchs 1 und eine Vorrichtung hierfür nach dem Oberbegriff des Patentanspruchs 12.

Zur Prüfung der Verkehrssicherheit von Kraftfahrzeugen ist es u.a. auch bekannt, Stoßdämpfer (Schwingungsdämpfer) von Kraftfahrzeugen in eingebautem Zustand zu prüfen. Bei der Stoßdämpferprüfung steht das jeweilige Rad des Kraftfahrzeugs mit seinem Reifen auf einer Radaufstandsfläche, die von einem mechanisch oder hydraulisch wirkenden Antrieb in Schwingung versetzt wird, auf. Dabei werden Stoßdämpferkennlinien in Form von Kraft-Weg- oder Kraft-Geschwindigkeits-Diagrammen ermittelt.

Aus der US-A-4 002 051 ist ein Verfahren und ein Vorrichtung zur Prüfung der Stoßdämpfung eines Kraftfahrzeuges und der Fahrsicherheit des Fahrzeuges bekannt. Dabei werden die Räder nacheinander auf eine Radaufstandsfläche gestellt und dort durch Halteelemente gegen Wegrollen festgehalten. Über die vertikal bewegbare Radaufstandsfläche wird eine Erregerschwingung in die Feder und Schwingungsdämpfer aufweisende Radaufhängung eingeleitet. Dazu ist ein Elektromotor mit einem Exzenter und einem Lenkergetriebe vorgesehen, so daß die Radaufstandsfläche zur Erzeugung einer periodischen Erregerschwingung vertikal auf- und abbewegt werden kann. Vier an der Radaufstandsfläche angeordnete Kraftsensoren messen die durch die Erregerschwingung erzeugten vertikalen Kräfte. Durch Vergleich einer durch die Erregerschwingung erzeugten minimalen oder maximalen Radlast mit einer statischen Radlast kann eine Aussage über den Zustand der Radaufhängung, d. h. des Feder-und Dämpfungsvermögens, und somit der Fahrsicherheit gemacht werden.

Da ein Reifen jedoch Geometrie- und Reifensteifigkeitsschwankungen über seinen Umfang aufweisen kann und er somit je nach Reifenstellung auf der Radaufstandsfläche ein unterschiedlich federndes bzw. schwingendes System darstellen kann, können mit dieser Vorrichtung, bei der das Rad der zu prüfenden Radaufhängung während der Überprüfung nicht rotieren kann, keine den realen Fahrbedingungen entsprechende Fahrsicherheitsaussagen getroffen werden.

Aus der EP-A-0 202 036 ist ein Verfahren und eine Vorrichtung zur Beurteilung der Leistungsfähigkeit von Stoßdämpfern an einem Kraftfahrzeug bekannt. Dabei werden die Räder eines Kraftfahrzeuges auf einer Radauflagefläche plaziert. Bei ruhendem, nicht erregtem Rad wird die statische Radlast mit Kraftaufnehmern gemessen. Die Räder werden dann mit einer sinusförmigen Schwingung konstanter Amplitude oberhalb der Eigenfrequenz erregt. Beim Ausschwingen wird die minimale Radlast gemessen und mit der statischen Radlast in Bezug gesetzt, um eine Aussage über den Zustand der Stoßdämpfung zu erhalten. Auch bei diesem Verfahren und der Vorrichtung zum Durchführen des Verfahrens wird die Radlast bei auf der Radauflagefläche stehendem, nichtrotierendem Rad gemessen. Einflüsse auf das Verhalten einer Radaufhängung, die ein rotierendes Rad im normalen Fahrbetrieb verursachen kann, können nicht berücksichtigt werden.

Aus der FR-A-2 575 826 ist eine Vorrichtung zum Überprüfen der Radaufhängung eines Kraftfahrzeuges bekannt. Eine Radaufstandsplatte ist an zwei Hebeln, die über zwei Achsen an einem Gehäuse schwenkbar befestigt sind, über ein jeweiliges Gelenk parallelogrammartig auf- und abwärts schwenkbar. Ein Antriebsmotor kann über einen Exzenter und eine Feder die Radaufstandsplatte in vertikale Schwingung versetzen. Über einen Kraftaufnehmer wird die statische sowie die durch die Schwingung erregte dynamische Radlast gemessen. Eine elektronische Auswerteschaltung liefert erwünschte Bezugswerte. Bei dieser Vorrichtung steht der Reifen während der Radlastmessungen still, damit die Meßergebnisse nicht durch den Reifen selbst beeinflußt werden.

Aus der FR-A-2 354 553 ist eine Vorrichtung zur Bestimmung einer Schwingungsdämpfung einer Kraftfahrzeugradaufhängung bekannt. Vergleichbar den oben beschriebenen Vorrichtungen wird ein Fahrzeugrad, das auf einer vertikal bewegbaren und durch einen Exzenterantrieb in Schwingung versetzbaren Platte still steht, d. h. nicht rotiert, gemeinsam mit der Radaufhängung zur Schwingung angeregt. Die dadurch erzeugte dynamische Radlast wird durch einen Kraftaufnehmer gemessen und mit der statischen Radlast verglichen. Eine Reifenungleichförmigkeit, die vom Drehwinkel des Reifens abhängt, wird nicht berücksichtigt.

Der Erfindung liegt demgegenüber die Aufgabe zugrunde, eine Prüfung der Fahrsicherheit durchzuführen und eine dafür geeignete Vorrichtung zu schaffen, bei der eine auf das jeweilige Kraftfahrzeugrad und seine Aufhängung bezogene Fahrsicherheitsaussage unter annähernd realen Fahrbedingungen gemacht werden können.

Diese Aufgabe wird beim eingangs genannten Verfahren erfindungsgemäß durch die kennzeichnenden Merkmale des Patent anspruchs 1 und bei der eingangs genannten Vorrichtung durch die kennzeichnenden Merkmale des Patentanspruchs 12 gelöst.

In den Unteransprüchen sind Weiterbildungen der Erfindung angegeben.

Durch die Erfindung wird eine Aussage über die dynamische Radlast, welche ein Parameter für die Fahrsicherheit ist, gewonnen, wobei mit dem auf der Radaufstandsfläche abrollenden Rad auch die Einflußfaktoren des sich drehenden Rades erfaßt werden können. Die Prüfung kann mit Hilfe eines Prüfstandes durchgeführt werden, mit dem ähnlich wie mit einem Stoßdämpferprüfstand gearbeitet werden kann, wobei jedoch als Kriterium nicht nur die vom Stoßdämpfer bei der Schwingungserregung entwickelte Kraft, sondern die dynamische Radlast, mit welcher der Reifen auf die Fahrbahnsimulierung in Form der Radaufstandsfläche drückt, gemessen wird. Aus der dynamischen Radlast läßt sich zusammen mit der statischen Radlast eine Sicherheitsreserve, die zur Bildung des Bezugswertes verwendet werden kann, bestimmen. Mit einer solchen Messung werden alle Einflüsse, die aus Stoßdämpferkraft, Reibung, der Radaufhängung, Unwucht des Rades, Unrundheit (Geometrie)- und Reifensteifigkeitsschwankungen resultieren, erfaßt. Die bei der Erfindung durchgeführte Messung der tatsächlich auftretenden dynamischen Radlast gibt eine umfassende und verläßliche Auskunft über die Fahrsicherheit, wobei durch Inbezugsetzung zum oben genannten Bezugswert eine Qualitätsaussage gewonnen werden kann. Für die Erregerschwingung wird bevorzugt eine näherungsweise harmonische Fußpunktbewegung gewählt. Die Erregerschwingung kann über eine Radaufstandsfläche in das Rad und die Radaufhängung eingeleitet werden. Für die sich bewegende Radaufstandsfläche eignet sich eine exzentrisch gelagerte Rolle, an deren Umfang zur harmonischen Fußpunkterregung das Rad mit seinem Reifen abgerollt wird. Die dynamische Radlast, mit welcher der Reifen auf die Radaufstandsfläche drückt, kann in der Weise gewonnen werden, daß die Reaktionskräfte, welche im Lager der exzentrisch gelagerten Rolle wirken, gemessen werden. Es handelt sich hier um die Erfassung von Reaktionskräften, die durch die Einleitung der Erregerschwingung in das Rad und das Radaufhängungssystem erzeugt werden.

Die Anordnung von Radachse, Radaufstandsfläche bzw. Fußpunkt und Drehachse der exzentrisch gelagerten Rolle kann in einer vertikalen Fluchtlinie liegen, jedoch kann die Anordnung der Radaufstandsfläche bzw. des Fußpunktes auch außerhalb dieser vertikalen Fluchtlinie liegen.

Die Bestimmung der statischen Radlast kann in der Weise erfolgen, daß nach dem Auffahren des Rades auf den Prüfstand, insbesondere auf die exzentrisch gelagerte Rolle, beispielsweise mit Hilfe einer Waage oder auch mit Hilfe des in vertikaler Richtung messenden Kraftsensors die statische Radlast ermittelt wird.

Es ist von Vorteil, von Zeit zu Zeit eine Eichung der Meßanordnung mit Messung und Speicherung des Rollengewichts und ein Auswuchten der exzentrisch gelagerten Rolle durchzuführen, so daß ein möglichst unverfälschtes Prüfungsergebnis erreicht wird.

Ergibt sich nach Durchführung des Meßlaufs, bei welchem auch im Hochlauf und im Auslauf die dynamische Radlast gemessen werden kann, daß die Amplitude der dynamischen Radlast einen von der statischen Radlast abhängigen und spezifischen Lastbezugswert übersteigt, ist dies ein Hinweis auf eine unzureichende Sicherheitsreserve. Es ist dann zu befürchten, daß sich einer oder mehrere der oben genannten Einflüsse nachteilig auf das Fahrverhalten und damit die Fahrsicherheit des Fahrzeugs auswirken können. Es kann dann dadurch eine gezielte Überprüfung dieser Parameter, im Hinblick auf Stoßdämpferkraft, Reibung in der Radaufhängung, Radunwucht, Geometrieschwankungen des Rades bzw. des Reifens und Reifensteifigkeitsschwankungen durchgeführt werden.

Anhand der Figuren wird an einem Ausführungsbeispiel die Erfindung noch näher erläutert. Es zeigt:

Fig. 1 einen ersten mechanischen Meßaufbau eines Ausführungsbeispiels der Erfindung;

Fig. 2 ein Blockschaltbild einer Auswerteeinrichtung für die bei der Prüfung gewonnenen Meßwerte;

Fig. 3 einen zweiten mechanischen Meßaufbau eines Ausführungsbeispiels der Erfindung;

Fig. 4 einen dritten mechanischen Meßaufbau eines Ausführungsbeispiels der Erfindung; und

Fig. 5 eine Kurvendarstellung zur Erläuterung der Sicherheitsreserve.

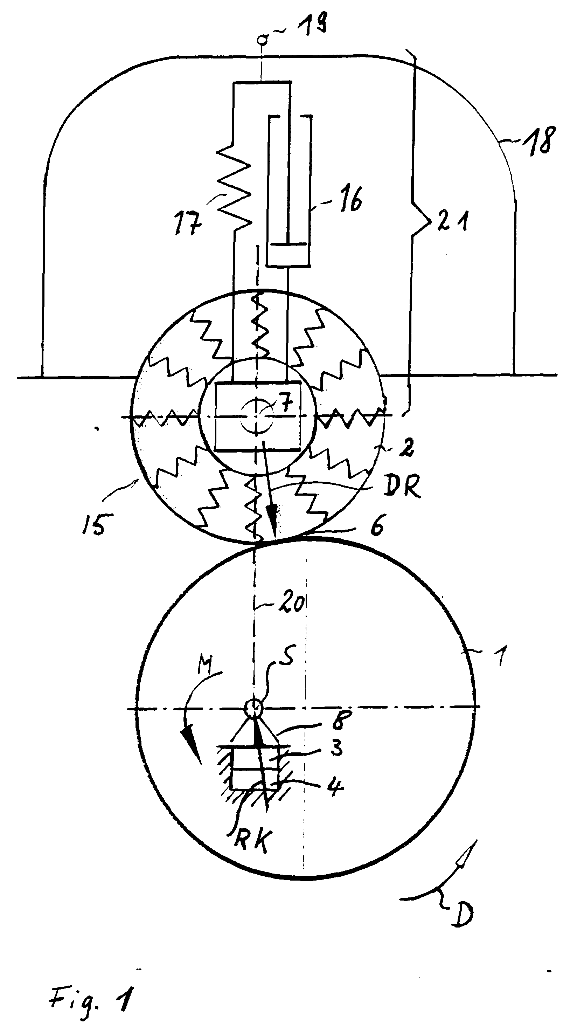

Das in der Fig. 1 dargestellte Ausführungsbeispiel einer Vorrichtung zum Prüfen der Fahrsicherheit von Kraftfahrzeugen umfaßt eine exzentrisch gelagerte Rolle 1, welche an ihrem Umfang für ein Kraftfahrzeugrad 15, bestehend aus Scheibenrad und Reifen 2, eine abrollbare Radaufstandsfläche 6 bildet. Das Kraftfahrzeugrad ist am Kraftfahrzeug montiert. Vom Kraftfahrzeug ist der Fahrzeugaufbau schematisch dargestellt und mit der Bezugsziffer 18 bezeichnet. Eine schematisch dargestellte Radaufhängung 21, über welche das Kraftfahrzeugrad 15 mit seiner Achse 7 am Fahrzeugaufbau 18 angelenkt ist, umfaßt einen Schwingungsdämpfer (Stoßdämpfer) 16 und eine Feder 17. Die Radachse 7 ist über die Feder 17 und den Schwingungsdämpfer 16 am Fahrzeugaufbau 18 angelenkt (Anlenkstelle 19).

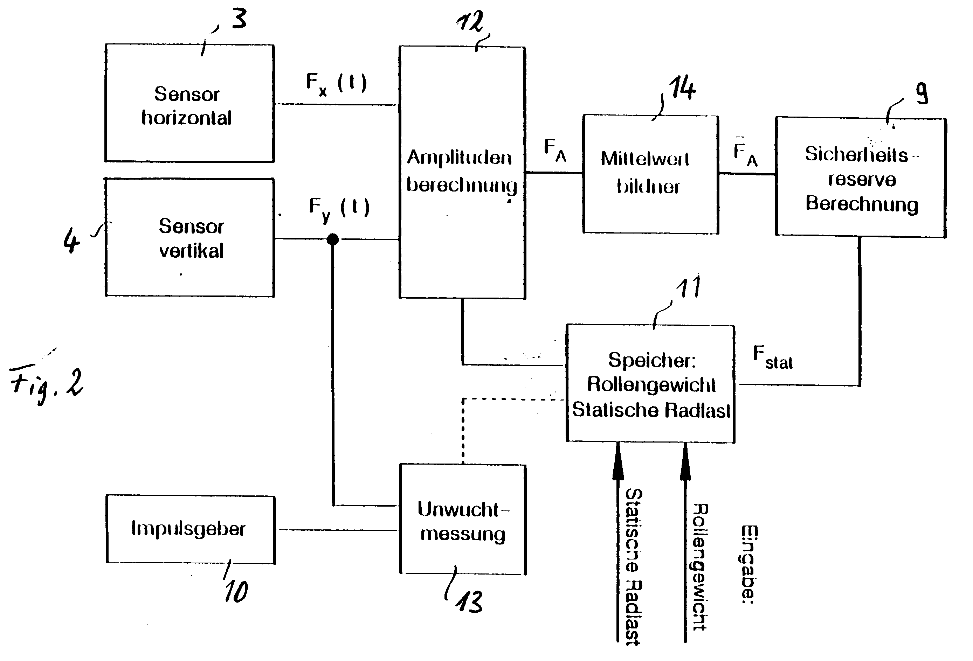

Die exzentrisch gelagerte Rolle 1, welche an ihrer Umfangsfläche die abrollbare Radaufstandsfläche 6 bildet, ist um eine exzentrisch zur geometrischen Mittellinie der Rolle 1 liegende Drehachse 5 in einem ortsfesten, beispielsweise an einem Maschinenrahmen befindlichen, Lager (Rollenlager 8) gelagert. Das Rollenlager 8 besitzt ferner einen Kraftsensor 3, mit welchem eine horizontale Kraftkomponente $F_x$ (t) (Fig. 2) gemessen werden kann. Ferner ist im Rollenlager 8 ein Zweiter Kraftsensor 4 vorgesehen, der eine vertikale Kraftkomponente $F_y$ (t) (Fig. 2) messen kann.

Die beiden Sensoren 3 und 4 bilden eine Reaktionskraftmeßeinrichtung, welche in der Rollenlagerung auftretende Kräfte erfassen. Wie die Fig. 2 zeigt, sind die beiden Ausgänge der Sensoren 3 und 4 mit einer Amplitudenbestimmungseinrichtung 12 verbunden, in der aus den beiden Komponenten der resultierende dynamische Kraftverlauf und daraus die Amplitude $F_A$ bestimmt wird. An die Ausgangsseite der Amplitudenbestimmungseinrichtung 12 ist über einen Mittelwertbildner 14 ein Rechner 9 angeschlossen. Mit dem Rechner 9 ist ferner eine Speichereinrichtung 11 für die statische Radlast und das Rollengewicht verbunden.

Ferner ist eine Unwuchtmeßeinrichtung 13 mit einem (beim Ausführungsbeispiel mit dem vertikal messenden Kraftsensor 4) oder beiden Sensoren 3 und 4 verbunden, um eine eventuelle Unwucht der exzentrisch gelagerten Rolle 1 zu ermitteln. Die Unwuchtmeßeinrichtung 13 ist mit einem Impulsgeber 10 zur Bestimmung einer Bezugswinkellage bei der Unwuchtmessung verbunden.

Im Rechner 9 werden die Meßwerte für die dynamische Radlast mit einem von der statischen Radlast abhängigen Bezugswert in Bezug gesetzt, wobei eine Sicherheitsreserve ermittelt werden kann, die eine Aussage über die Fahrsicherheit gibt, welche von dem aus dem Kraftfahrzeugrad und seiner Aufhängung einschließlich Stoßdämpfer und Feder bestehenden System gewährleistet wird. Zur Erläuterung dieser Sicherheitsreserve wird auf die Fig. 5 verwiesen. In der Fig. 5 ist in Abhängigkeit von der Zeit t schematisch die Schwankung einer dynamischen Radlast dargestellt. Die Amplitude $F_A$ der dynamischen Radlast kann dem Ausgangssignal $\bar{F}_A$ des Mittelwertbildners 14 entsprechen. Die dynamische Radlast schwankt mit ihrer Amplitude um die statische Radlast Fstat zwischen Fmax und Fmin. Die Sicherheitsreserve R, welche eine Aussage über die Fahrsicherheit des Kraftfahrzeugrades und seiner Aufhängung liefert, ist definiert durch folgende Gleichung:

$$R = \frac{Fstat - F_A}{Fstat}$$

Ein Prüfvorgang läuft folgendermaßen ab:

Eines der Kraftfahrzeugräder - in der Fig. 1 das Kraftfahrzeugrad 15 - wird mit seinem Reifen 2 auf die exzentrisch gelagerte Rolle 1 aufgesetzt. Durch nicht näher dargestellte Fixierungsmittel wird das Fahrzeug fixiert. Bei dem in der Fig. 1 dargestellten Ausführungsbeispiel liegt der Fußpunkt, mit welchem der Reifen 2 auf der Radaufstandsfläche 6 aufsteht, außerhalb einer vertikalen Fluchtungslinie 20, in welcher die Drehachse 5 der exzentrisch gelagerten Rolle 1 und die Radachse 7 liegen. Dieser Fußpunkt wandert bei der Drehung der exzentrisch gelagerten Rolle 1 auf die andere Seite der vertikalen Fluchtungslinie 20. Der Fußpunkt bzw. die Radaufstandsfläche 6 wandert während der Drehung der Rolle 1 hin und her von einer Seite zur anderen Seite der vertikalen Fluchtungslinie 20.

Das Kraftfahrzeugrad 15 ist frei drehbar und wird von der durch einen nicht näher dargestellten Rollenantrieb in Drehung versetzten Rolle 1 mitgedreht. Die in Drehung versetzte exzentrische Rolle 1 bildet einen Schwingungsgenerator, der entlang seiner abrollbaren Radaufstandsfläche 6 in das aus Kraftfahrzeugrad mit starrem Scheibenrad und Reifen mit gegebenenfalls in Umfangsrichtung wechselnden Federeigenschaften sowie Radaufhängung 21 mit Feder 17 und Schwingungsdämpfer 16 bestehende System harmonische Schwingungen (Sinusschwingungen) induziert. Die Frequenz dieser Schwingungen ändert sich mit der Drehzahl der Rolle 1 und des aufstehenden Kraftfahrzeugrades 15.

Bevor die Rolle 1 und das aufstehende Kraftfahrzeugrad 15 in Drehung vesetzt werden, wird eine Messung der statischen Radlast des Kraftfahrzeugrades, beispielsweise mit Hilfe einer nicht näher dargestellten Waage oder auch mit Hilfe des vertikal messenden Sensors 4, erfaßt und in die Speichereinrichtung 11 eingegeben. Wenn die statische Radlast für den Fahrzeugtyp bekannt ist, braucht diese Messung nicht vorgenommen zu werden, und die statische Radlast kann beispielsweise mit Hilfe einer manuell zu betätigenden Eingabeeinrichtung in die Speichereinrichtung 11 eingegeben werden.

Durch die induzierten Schwingungen wird eine dynamische Radlast erzeugt, mit der der Reifen 2 auf die sich bewegende bzw. abrollende Aufstandsfläche 6 der Rolle 1 drückt. Diese dynamische Radlast beinhaltet Kraftschwankungen, welche in der Rollenlagerung 8 Reaktionskräfte bewirken, welche mit den beiden Kraftsensoren 3 und 4 in horizontaler Komponente und vertikaler Komponente gemessen werden. In der Fig. 1 ist die Wirkrichtung der dynamischen Radlast, mit welcher der Reifen 2 auf die Aufstandsfläche 6 drückt, mit einem Pfeil DR bezeichnet. Die in Abhängigkeit davon von den Sensoren 3 und 4 erfaßte Reaktionskraft im Rollenlager 8 ist durch einen Pfeil RK bezeichnet. Die Drehrichtung der Rolle 1 ist mit einem Pfeil D in der Fig. 1 bezeichnet. Zusammen mit dem Fußpunkt bzw. der Radaufstandsfläche 6 wandern die Wirkrichtung DR der dynamischen Radlast und die Richtung der gemessenen Reaktionskraft RK bezüglich der vertikalen Fluchtungslinie 20 von der einen zur anderen Seite hin und her.

Durch das Einleiten harmonischer Schwingungen, deren Frequenz mit der Drehzahl der Rolle 1 geändert werden kann, läßt sich ein großes Spektrum an Bedingungen, wie sie im Fahrbetrieb auftreten, simulieren. Durch die Messung der dynamischen Radlastschwankung in Form der geschilderten Reaktionskraftschwankungen wird eine Aussage über die Fahrsicherheit gewonnen, da durch die dynamische Radlastschwankungsmessung alle Einflüsse erfaßt sind, die abhängen von der Schwingungsdämpferkraft, der Reibung in der Radaufhängung, einer evtl. Radunwucht, Geometrieschwankungen des Kraftfahrzeugrades und Reifensteifigkeitsschwankungen. Bei Durchführung eines Prüfvorgangs wird aus dem Kraftschwankungsverlauf, der die dynamische Radlast angibt, ein Amplitudenwert F in der Amplitudenbestimmungseinrichtung 12 ermittelt und bei mehreren Umläufen im Mittelwertbildner 14 gemittelt. Dieser Mittelwert wird in einem Rechner 9 mit einem Bezugswert, der in einer Speichereinrichtung 11 abgelegt ist, zur Bildung der Sicherheitsreserve verknüpft. Dieser Bezugswert wird gebildet aus der statischen Radlast, wobei auch das Gewicht der Rolle 1 mit berücksichtigt wird.

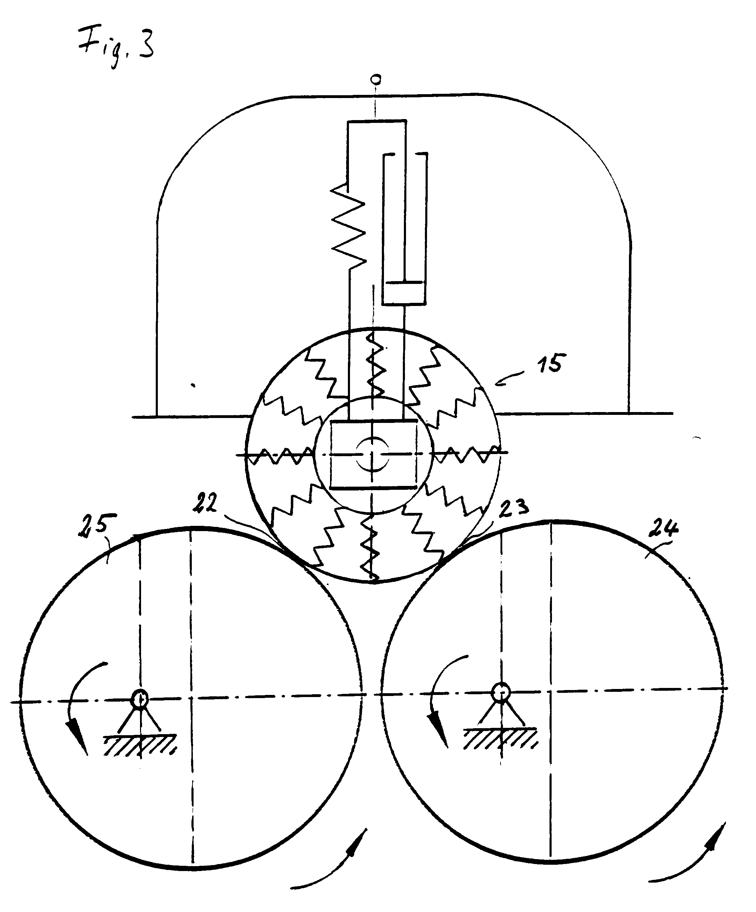

Bei dem in der Fig. 3 dargestellten Ausführungsbeispiel bilden zwei exzentrisch gelagerte Rollen 24 und 25 abrollende Radaufstandsflächen 22 und 23 für das Kraftfahrzeugrad 15. Die beiden exzentrisch gelagerten Rollen 24 und 25 sind für einen synchronen Umlauf, beispielsweise durch nicht näher dargestellte Zahnräder und gegebenenfalls Zahnriemen, miteinander gekoppelt. Durch die Lagerung des Kraftfahrzeugrades 15 zwischen den beiden Rollen ist eine bessere Fixierung des zu prüfenden Kraftfahrzeuges gewährleistet.

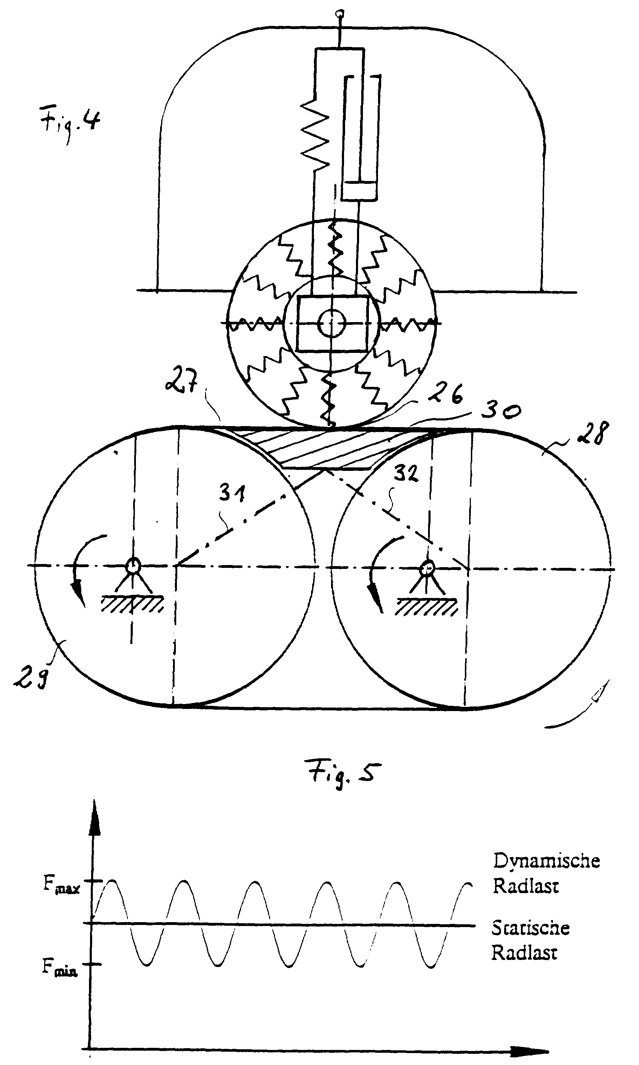

Bei einer weiteren Ausführungsform, die in der Fig. 4 dargestellt ist, wird eine abrollende Aufstandsfläche 26 von einem Endlosband 27 gebildet, das um zwei exzentrisch gelagerte Rollen 28 und 29 geschlungen ist. Die beiden exzentrisch gelagerten Rollen 28 und 29 sind ebenfalls für einen synchronen Umlauf miteinander gekoppelt. Das Endlosband 27 kann ferner im Bereich des aufstehenden Kraftfahrzeugrades 15 über eine Stützfläche 30 geführt sein. Diese Stützfläche 30 schwingt mit dem Endlosband 27 synchron mit. Hierzu kann eine starre Kopplung der Stützfläche 30 mit den Mittelpunkten der beiden exzentrisch gelagerten Rollen 28 und 29 vorgesehen sein. Diese starre Kopplung ist durch strichlierte Linien 31 und 32 schematisch verdeutlicht.

Ferner kann die Exzentergröße der exzentrisch gelagerten Rollen in den Ausführungsformen der Fig. 1, 3 und 4 einstellbar sein. Hierzu können beispielsweise zwei Exzenter ineinander gelagert sein, wobei durch Verdrehen der Exzenter die Exzentergröße auf bestimmte Werte vorgewählt werden kann.

Durch die in den Figuren dargestellten Prüfanordnungen lassen sich alle im Fahrbetrieb relevanten Schwingungsfrequenzen erzeugen. Dabei kann im Hochlauf der Frequenzbereich unterhalb der Resonanz, der Frequenzbereich im Resonanzbereich und der Frequenzbereich oberhalb des Resonanzbereiches angefahren werden. Die maximale Drehzahl für das Kraftfahrzeugrad kann in Abhängigkeit von der maximalen Geschwindigkeit, welche das Kraftfahrzeug im Fahrbetrieb erreichen kann, jeweils festgelegt sein.

Die in den Figuren dargestellten Meßanordnungen können von Zeit zu Zeit geeicht werden. Hierbei wird insbesondere das Rollengewicht erfaßt und in die Speichereinrichtung 11 eingegeben. Ferner ist es möglich, eine Unwuchtmessung mit Hilfe einer Unwuchtmneßeinrichtung 13, die an einen oder beide Sensoren 3 und 4 (beim Ausführungsbeispiel an den Sensor 4) angeschlossen ist, durchzuführen. Die ermittelte Unwucht kann bei der jeweiligen Bemessung des fahrzeugspezifischen Bezugswertes mit berücksichtigt werden. Dies kann gleichzeitig mit der Eichung bei der Feststellung des Rollengewichts erfolgen. Es ist jedoch auch möglich, in Abhängigkeit von der ermittelten Unwucht einen Unwuchtausgleich an der exzentrisch gelagerten Rolle 1 durchzuführen. Auf diese Weise wird gewährleistet, daß das Meßergebnis unbeeinflußt ist von Unwuchten der Rolle 1 bzw. der Rollen.

## Patentansprüche

1. Verfahren zur Prüfung der Fahrsicherheit eines Kraftfahrzeugs, bei dem durch Fußpunkterregung Schwingungen über ein auf einer Radaufstandsfläche aufstehendes Kraftfahrzeugrad in die Feder und Schwingungsdämpfer aufweisende Radaufhängung des Kraftfahrzeugrades eingeleitet werden, die durch die Erregerschwingungen bewirkte dynamische Radlast, mit welcher der Reifen des Rades auf die Radaufstandsfläche drückt, und die statische Radlast gemessen werden und die gemessene dynamische Radlast mit einem von der statischen Radlast abhängigen Bezugswert in Bezug gesetzt wird, dadurch gekennzeichnet, daß die dynamische Radlast bei auf der Radaufstandsfläche abrollendem Rad gemessen wird.

2. Verfahren nach Anspruch 1, dadurch gekennzeichnet, daß die dynamische Radlast als Reaktionskraft auf der Seite der Fußpunkterregung gemessen wird.

3. Verfahren nach Anspruch 1 oder 2, dadurch gekennzeichnet daß aus der gemessenen dynamischen Radlast die Amplitude ermittelt wird, die mit dem Bezugswert verknüpft wird.

4. Verfahren nach einem der Ansprüche 1 bis 3, dadurch gekennzeichnet, daß die Amplitude als Mittelwert aus mehreren aufeinander folgenden Meßumläufen gebildet wird.

5. Verfahren nach einem der Ansprüche 1 bis 4, dadurch gekennzeichnet, daß bei der dynamischen Radlastmessung Kraftkomponenten in zwei zu einander senkrechten Richtungen gemessen und daraus die Resultierende gebildet wird.

6. Verfahren nach einem der Ansprüche 1 bis 5, dadurch gekennzeichnet, daß durch die Fußpunkterregung und/oder periodische Schwingungen harmonische Schwingungen in die Radaufhängung eingeleitet werden.

7. Verfahren nach einem der Ansprüche 1 bis 6, dadurch gekennzeichnet, daß die dynamische Radlastmessung im Hochlauf und/oder Auslauf durchgeführt wird.

8. Verfahren nach einem der Ansprüche 1 bis 7, dadurch gekennzeichnet, daß während eines Prüflaufs in Frequenzbereichen unterhalb des Resonanzbereiches, im Resonanzbereich und oberhalb des Resonanzbereiches der Prüfanordnung die dynamische Radlastmessung durchgeführt wird.

9. Verfahren nach einem der Ansprüche 1 bis 8, dadurch gekennzeichnet, daß die Erregerschwingung in vertikaler Richtung zur Radachse eingeleitet wird.

10. Verfahren nach einem der Ansprüche 1 bis 9, dadurch gekennzeichnet, daß die Erregerschwingung in einer zur vertikalen Richtung im spitzen Winkel verlaufenden Richtung zur Radachse hin eingeleitet wird.

11. Verfahren nach einem der Ansprüche 1 bis 10, dadurch gekennzeichnet, daß aus der statischen Radlast und der gemessenen dynamischen Radlast ein Wert für eine Sicherheitsreserve bestimmt wird.

12. Vorrichtung zum Prüfen der Fahrsicherheit von Kraftfahrzeugen mit einer Radaufstandsfläche, auf welche eines der Räder des Kraftfahrzeugs für die Einleitung einer Erregerschwingung in die Feder und Schwingungsdämpfer aufweisende Radaufhängung aufstellbar ist, einem Schwingungsgenerator zum Erzeugen der Erregerschwingung, die auf die Radaufstandsfläche wirkt und einer Kraftmeßeinrichtung zum Messen von durch die Erregerschwingung erzeugten Kräfte, dadurch gekennzeichnet, daß die Radaufstandsfläche (6; 22, 23; 26) als während der Messung abrollende Fläche ausgebildet ist.

13. Vorrichtung nach Anspruch 12, dadurch gekennzeichnet, daß die Erregerschwingung eine periodische Schwingung ist und daß die Kraftmeßeinrichtung als Reaktionskraftmeßeinrichtung (3, 4) auf der Seite des Schwingungsgenerators (1, 5) ausgebildet ist, welche die zwischen Radaufstandsfläche (6; 22, 23; 26) und Reifen (2) des Rades wirkenden Kraftschwankungen mißt.

14. Vorrichtung nach Anspruch 12 oder 13, dadurch gekennzeichnet, daß der Schwingungsgenerator (1, 5) eine sinusverwandte Schwingung erzeugt.

15. Vorrichtung nach einem der Ansprüche 12 bis 14, dadurch gekennzeichnet, daß der Schwingungsgenerator (1, 5) eine exzentrisch gelagerte Rolle (1), auf der das Rad mit seinem Reifen (2) aufstellbar ist, aufweist.

16. Vorrichtung nach Anspruch 15, dadurch gekennzeichnet, daß die Reaktionskraftmeßeinrichtung (3, 4) Lagerkräfte der Rolle (1) erfaßt.

17. Vorrichtung nach einem der Ansprüche 13 bis 16, dadurch gekennzeichnet, daß die Reaktionskraftmeßeinrichtung (3, 4) Sensoren (3 und 4) aufweist, die in vertikaler Richtung und in horizontaler Richtung messen.

18. Vorrichtung nach Anspruch 16 oder 17, dadurch gekennzeichnet, daß die exzentrisch gelagerte Rolle (1) ausgewuchtet ist.

19. Vorrichtung nach einem der Ansprüche 15 bis 18, dadurch gekennzeichnet, daß der Fußpunkt, in welchem der Reifen (2) auf der Aufstandsfläche (6) aufsteht und über welchen die Erregerschwingung eingeleitet wird, die Drehachse der exzentrisch gelagerten Rolle (1) und die Radachse (7) in einer vertikalen Fluchtlinie liegen.

20. Vorrichtung nach einem der Ansprüche 15 bis 19, dadurch gekennzeichnet, daß der Fußpunkt, in welchem der Reifen (2) auf der Aufstandsfläche (6) aufsteht und über welchen die Erregerschwingung eingeleitet wird, außerhalb der vertikalen Fluchtlinie liegt, in welcher die Radachse (7) und die Drehachse (5) der exzentrisch gelagerten Rolle (1) angeordnet sind.

21. Vorrichtung nach einem der Ansprüche 15 bis 20, dadurch gekennzeichnet, daß die Drehzahl der Rolle (1) bis über die Resonanzdrehzahl einstellbar ist.

22. Vorrichtung nach einem der Ansprüche 15 bis 21, dadurch gekennzeichnet, daß die Breite der Rolle (1) mindestens so groß wie die Aufstandsbreite des Reifens (2) ist.

23. Vorrichtung nach einem der Ansprüche 13 bis 22, dadurch gekennzeichnet, daß an die Reaktionskraftmeßeinrichtung (3, 4) ein Rechner (9) angeschlossen ist, der ferner mit einer Speichereinrichtung (11) verbunden ist, die ein der statischen Radlast proportionales Bezugssignal an den Rechner (9) liefert.

24. Vorrichtung nach einem der Ansprüche 13 bis 23, dadurch gekennzeichnet, daß zwischen die Reaktionskraftmeßeinrichtung (3, 4) und den Rechner (9) eine Amplitudenbestimmungseinrichtung (12) angeschlossen ist, welche aus den gemessenen Kraftschwankungen der dynamischen Radlast einen Mittelwert ermittelt, der mit dem Bezugssignal verknüpft wird.

25. Vorrichtung nach Anspruch 24, dadurch gekennzeichnet, daß an die Amplitudenbestimmungseinrichtung (12) und die Speichereinrichtung (11) oder eine Eingabeeinrichtung für die statische Radlast der Rechner (9) angeschlossen ist, welcher den Wert der Sicherheitsreserve

$$R = \frac{F_{stat} - F_A}{F_{stat}}$$

bildet, wobei $F_{stat}$ die statische Radlast und $F_A$ die Amplitude der dynamischen Radlast bedeuten.

**26.** Vorrichtung nach Anspruch 25, dadurch gekennzeichnet, daß ferner ein Mittelwertbildner (14) vorgesehen ist, welcher aus mehreren Amplitudenwerten für die dynamische Radlast einen Mittelwert für die Bestimmung der Sicherheitsreserve bildet.

**27.** Vorrichtung nach einem der Ansprüche 12-14, dadurch gekennzeichnet, daß die abrollende Radaufstandsfläche (22, 23) von zwei exzentrisch gelagerten Rollen (24, 25) gebildet ist, welche für einen synchronen Umlauf miteinander gekoppelt sind.

**28.** Vorrichtung nach einem der Ansprüche 12-14, dadurch gekennzeichnet, daß die abrollende Radaufstandsfläche (26) von einem Endlosband (27) gebildet ist, das um zwei exzentrisch gelagerte Rollen (28, 29), welche für einen synchronen Umlauf miteinander gekoppelt sind, geschlungen ist.

**29.** Vorrichtung nach Anspruch 28, dadurch gekennzeichnet, daß das Endlosband (27) im Bereich des aufstehenden Rades über eine Stützfläche (30) geführt ist, welche mit dem Endlosband (27) synchron mitschwingt.

**30.** Vorrichtung nach einem der Ansprüche 12 bis 29, dadurch gekennzeichnet, daß die Exzentergröße der Rolle bzw. der Rollen einstellbar ist.

**Claims**

**1.** A method of testing the roadworthiness of a motor vehicle wherein oscillations are introduced by footprint excitation by way of a motor vehicle wheel supported on a wheel support surface into the wheel suspension of the motor vehicle wheel which has spring and shock absorber, the dynamic wheel loading which is produced by the excitation oscillations and with which the tyre of the wheel presses onto the wheel support surface and the static wheel loading are measured and the measured dynamic wheel loading is related to a reference value which is dependent on the static wheel loading, characterised in that the dynamic wheel loading is measured with the wheel rolling on the wheel support surface.

**2.** A method according to claim 1 characterised in that the dynamic wheel loading is measured as a reaction force on the side of the footprint excitation.

**3.** A method according to claim 1 or claim 2 characterised in that the amplitude which is linked to the reference value is ascertained from the measured dynamic wheel loading.

**4.** A method according to one of claims 1 to 3 characterised in that the amplitude is formed as a mean value from a plurality of successive measuring revolutions.

**5.** A method according to one of claims 1 to 4 characterised in that in the dynamic wheel loading measurement operation force components in two mutually perpendicular directions are measured and the resultant is formed therefrom.

**6.** A method according to one of claims 1 to 5 characterised in that harmonic oscillations are introduced into the wheel suspension by the footprint excitation and/or periodic oscillations.

**7.** A method according to one of claims 1 to 6 characterised in that the dynamic wheel loading measurement operation is conducted in the acceleration phase and/or the slowing-down phase.

**8.** A method according to one of claims 1 to 7 characterised in that the dynamic wheel loading measurement operation is conducted during a test run in frequency ranges below the resonance range, in the resonance range and above the resonance range of the test arrangement.

**9.** A method according to one of claims 1 to 8 characterised in that the excitation oscillation is introduced in a vertical direction relative to the wheel axis.

**10.** A method according to one of claims 1 to 9 characterised in that the excitation oscillation is introduced in a direction towards the wheel axis which is at an acute angle relative to the vertical direction.

**11.** A method according to one of claims 1 to 10 characterised in that a value for a safety reserve is determined from the static wheel loading and the measured dynamic wheel loading.

**12.** Apparatus for testing the roadworthiness of motor vehicles comprising a wheel support surface onto which can be placed one of the wheels of the motor vehicle for introducing an excitation oscillation into the wheel suspension having spring and shock absorber, an oscillation generator for generating the excitation oscillation which acts on the wheel support surface and a force measuring device for measuring forces generated by the excitation oscillation, characterised in that the wheel support surface (6; 22, 23; 26) is in the form of a surface which rolls during the measurement operation.

**13.** An apparatus according to claim 12 characterised in that the excitation oscillation is a periodic oscillation and that the force measuring device is in the form of a reaction force measuring device (3, 4) on the side of the oscillation generator (1, 5) which measures the force fluctuations which act between the wheel support surface (6; 22, 23; 26) and the tyre (2) of the wheel.

14. An apparatus according to claim 12 or claim 13 characterised in that the oscillation generator (1, 5) generates a sine-related oscillation.

15. An apparatus according to one of claims 12 to 14 characterised in that the oscillation generator (1, 5) has an eccentrically mounted roller (1) on which the wheel with its tyre (2) can be placed.

16. An apparatus according to claim 15 characterised in that the reaction force measuring device (3, 4) detects mounting forces of the roller (1).

17. An apparatus according to one of claims 13 to 16 characterised in that the reaction force measuring device (3, 4) has sensors (3 and 4) which measure in the vertical direction and in the horizontal direction.

18. An apparatus according to claim 16 or claim 17 characterised in that the eccentrically mounted roller (1) is balanced.

19. An apparatus according to one of claims 15 to 18 characterised in that the footprint at which the tyre (2) is supported on the support surface (6) and by way of which the excitation oscillation is introduced, the axis of rotation of the eccentrically mounted roller (1) and the wheel axis (7) lie in a vertical line of alignment.

20. An apparatus according to one of claims 15 to 19 characterised in that the footprint at which the tyre (2) is supported on the support surface (6) and by way of which the excitation oscillation is introduced lies outside the vertical line of alignment in which the wheel axis (7) and the axis of rotation (5) of the eccentrically mounted roller (1) are arranged.

21. An apparatus according to one of claims 15 to 20 characterised in that the speed of rotation of the roller (1) is adjustable to above the resonance speed of rotation.

22. An apparatus according to one of claims 15 to 21 characterised in that the width of the roller (1) is at least as great as the support width of the tyre (2).

23. An apparatus according to one of claims 13 to 22 characterised in that connected to the reaction force measuring device (3, 4) is a computer (9) which is also connected to a storage device (11) which supplies to the computer (9) a reference signal that is proportional to the static wheel loading.

24. An apparatus according to one of claims 13 to 23 characterised in that connected between the reaction force measuring device (3, 4) and the computer (9) is an amplitude-determining device (12) which ascertains from the measured fluctuations in force of the dynamic wheel loading a mean value which is linked to the reference signal.

25. An apparatus according to claim 24 characterised in that connected to the amplitude-determining device (12) and the storage device (11) or an input device for the static wheel loading is the computer (9) which forms the value of the safety reserve

$$R = \frac{Fstat - F_A}{Fstat}$$

wherein Fstat denotes the static wheel loading and $F_A$ denotes the amplitude of the dynamic wheel loading.

26. An apparatus according to claim 25 characterised in that there is further provided a mean value-forming device (14) which, from a plurality of amplitude values for the dynamic wheel loading, forms a mean value for determining the safety reserve.

27. An apparatus according to one of claims 12 to 14 characterised in that the rolling wheel support surface (22, 23) is formed by two eccentrically mounted rollers (24, 25) which are coupled together for synchronous rotation.

28. An apparatus according to one of claims 12 to 14 characterised in that the rolling wheel support surface (26) is formed by an endless belt (27) which is passed around two eccentrically mounted rollers (28, 29) which are coupled together for synchronous rotation.

29. An apparatus according to claim 28 characterised in that in the region of the wheel supported thereon the endless belt (27) is guided over a support surface (30) which oscillates synchronously with the endless belt (27).

30. An apparatus according to one of claims 12 to 29 characterised in that the degree of eccentricity of the roller or rollers is adjustable.

## Revendications

1. Procédé pour tester la sécurité de conduite d'un véhicule automobile, qui consiste à appliquer, au moyen d'une excitation d'un point de base, des vibrations par l'intermédiaire d'une roue de véhicule automobile, qui s'appuie sur une surface, à la suspension de la roue du véhicule automobile, qui comporte un ressort et un amortisseur de vibrations, à mesurer la charge dynamique de roue, qui est provoquée par les vibrations d'excitation et par laquelle le pneumatique de la roue applique une pression à la surface d'appui de la roue, et la charge statique de roue, et à comparer la charge dynamique de roue mesurée à une valeur de référence qui dépend de la charge statique de roue, caractérisé par le fait qu'on mesure la charge dynamique de roue lorsque la roue roule sur la surface d'appui.

2.  Procédé suivant la revendication 1, caractérisé par le fait qu'on mesure la charge dynamique de roue en tant que force de réaction du côté de l'excitation du point de base.

3.  Procédé suivant la revendication 1 ou 2, caractérisé par le fait que l'on détermine l'amplitude, qui est combinée à la valeur de référence, à partir de la charge dynamique de roue mesurée.

4.  Procédé suivant l'une des revendications 1 à 3, caractérisé en ce que l'amplitude est formée en tant que valeur moyenne à partir de plusieurs cycles de mesure successifs.

5.  Procédé suivant l'une des revendications 1 à 4, caractérisé en ce que lors de la mesure dynamique de la charge de roue, on mesure des composantes de force dans deux directions perpendiculaires entre elles dont on forme la résultante.

6.  Procédé suivant l'une des revendications 1 à 5, caractérisé en ce que l'on applique, par l'excitation du point de base et/ou des vibrations périodiques, des vibrations harmoniques à la suspension de roue.

7.  Procédé suivant l'une des revendications 1 à 6, caractérisé en ce qu'on exécute la mesure dynamique de la charge de roue pendant la marche à régime élevée et/ou lors de l'arrêt par inertie.

8.  Procédé suivant l'une des revendications 1 à 7, caractérisé en ce qu'on exécute la mesure dynamique de la charge de roue pendant un cycle de test dans des gammes de fréquences inférieures à la gamme de résonance, dans la gamme de résonance et au-dessus de la gamme de résonance du dispositif de test.

9.  Procédé suivant l'une des revendications 1 à 8, caractérisé en ce qu'on applique la vibration d'excitation dans une direction verticale par rapport à l'axe de roue.

10. Procédé suivant l'une des revendications 1 à 9, caractérisé en ce qu'on applique la vibration d'excitation dans une direction qui fait un angle aigu par rapport à la direction verticale et est dirigée vers l'axe de roue.

11. Procédé suivant l'une des revendications 1 à 10, caractérisé en ce qu'on détermine une valeur d'une réserve de sécurité à partir de la charge statique de roue et de la charge dynamique de roue mesurée.

12. Dispositif pour tester la sécurité de conduite de véhicules automobiles comportant une surface d'appui d'une roue, sur laquelle l'une des roues du véhicule automobile peut être mise pour l'application d'une vibration d'excitation à la suspension de roue comportant un ressort et un amortisseur de vibrations, un générateur de vibrations destiné à produire la vibration d'excitation qui agit sur la surface d'appui de la roue, et un dispositif dynamométrique destiné à mesurer des forces produites par la vibration d'excitation, caractérisé par le fait que la surface (6;22,23;26) d'appui de la roue est agencée sous la forme d'une surface qui roule pendant la mesure.

13. Dispositif selon la revendication 12, caractérisé en ce que la vibration d'excitation est une vibration périodique et que le dispositif dynamométrique est agencé en tant que dispositif de mesure de forces de réaction (3,4) situé du côté du générateur de vibrations (1,5) et qui mesure les variations de force qui agissent entre la surface (6;22, 23;26) d'appui de la roue et le pneumatique (2) de la roue.

14. Dispositif selon la revendication 12 ou 13, caractérisé en ce que le générateur de vibrations (1,5) produit une vibration apparentée à une vibration sinusoïdale.

15. Dispositif selon l'une des revendications 12 à 14, caractérisé par le fait que le générateur de vibrations (1,5) comporte un rouleau (1) monté de façon excentrée, sur lequel la roue peut être posée par son pneumatique (2).

16. Dispositif selon la revendication 15, caractérisé en ce que le dispositif dynamométrique de mesure de forces de réaction (3,4) détecte des forces de support du rouleau (1).

17. Dispositif selon l'une des revendications 13 à 16, caractérisé par le fait que le dispositif dynamométrique de mesure de forces de réaction (3,4) comporte des capteurs (3,4), qui effectuent une mesure dans une direction verticale et dans une direction horizontale.

18. Dispositif suivant la revendication 16 ou 17, caractérisé par le fait que le rouleau (1) monté de façon excentrée est équilibré.

**19.** Dispositif selon l'une des revendications 15 à 18, caractérisé par le fait que le point de base, par lequel le pneumatique (2) est mis sur la surface d'appui (6) et par l'intermédiaire duquel est appliquée la vibration d'excitation, l'axe de rotation du rouleau (1) monté de façon excentrique et l'axe de roue (7) sont alignés sur une droite verticale.

**20.** Dispositif selon l'une des revendications 15 à 19, caractérisé par le fait que le point de base, par lequel le pneumatique (2) est mis sur la surface d'appui (6) et par l'intermédiaire duquel la vibration d'excitation est appliquée, est situé en dehors de la droite verticale d'alignement, sur laquelle sont disposés l'axe de roue (7) et l'axe de rotation (5) du rouleau (1) monté de façon excentrée.

**21.** Dispositif selon l'une des revendications 15 à 20, caractérisé par le fait que la vitesse de rotation du rouleau (1) est réglable jusqu'à une valeur supérieure à la vitesse de rotation de résonance.

**22.** Dispositif selon l'une des revendications 15 à 21, caractérisé en ce que la largeur du rouleau (1) est au moins égale à la largeur d'appui du pneumatique (2).

**23.** Dispositif selon l'une des revendications 13 à 22, caractérisé par le fait qu'au dispositif dynamométrique de mesure de forces de réaction (3,4) est raccordé un ordinateur (9) qui est en outre relié à un dispositif de mémoire (11), qui envoie à l'ordinateur (9) un signal de référence proportionnel à la charge statique de roue.

**24.** Dispositif selon l'une des revendications 13 à 23, caractérisé par le fait qu'entre le dispositif dynamométrique de mesure de forces de réaction (3,4) et l'ordinateur (9) est branché un dispositif de détermination d'amplitude (12), qui détermine, à partir des variations mesurées de la force due à la charge dynamique de roue, une valeur moyenne qui est combinée au signal de référence.

**25.** Dispositif selon la revendication 24, caractérisé en ce qu'au dispositif de détermination d'amplitude (12) et au dispositif de mémoire (11) ou à un dispositif d'entrée pour la charge statique de roue est raccordé l'ordinateur (9), qui forme la valeur de la réserve de sécurité

$$R = \frac{Fstat - F_A}{Fstat}$$

Fstat représentant la charge statique de roue et $F_A$ l'amplitude de la charge dynamique de roue.

**26.** Dispositif suivant la revendication 25, caractérisé par le fait qu'il est en outre prévu un dispositif (14) de formation de la valeur moyenne, qui forme, à partir de plusieurs valeurs d'amplitude pour la charge dynamique de roue, une valeur moyenne pour la détermination de la réserve de sécurité.

**27.** Dispositif suivant l'une des revendications 12 à 14, caractérisé par le fait que la surface roulante (22,23) d'appui de la roue est formée de deux rouleaux (24,25) montés de façon excentrée et qui sont couplés entre eux pour tourner de façon synchrone.

**28.** Dispositif suivant l'une des revendications 12 à 14, caractérisé par le fait que la surface roulante (26) d'appui de la roue est formée d'une bande sans fin (27), qui passe sur deux rouleaux (28,29) montés de façon excentrée et couplés entre eux pour tourner de façon synchrone.

**29.** Dispositif selon la revendication 28, caractérisé en ce que la bande sans fin (27) est guidée, dans la zone de la roue en appui, sur une surface d'appui (30), qui vibre conjointement d'une manière synchrone avec la bande sans fin (27).

**30.** Dispositif suivant l'une des revendications 12 à 29, caractérisé par le fait que la distance d'excentricité du ou des rouleaux est réglable.

Fig. 1

Fig. 2

Sensor horizontal — 3

Sensor vertikal — 4

Impulsgeber — 10

Amplituden berechnung — 12

Unwucht-messung — 13

Mittelwertbildner — 14

Speicher: Rollengewicht Statische Radlast — 11

Sicherheits-reserve Berechnung — 9

$F_x(t)$

$F_y(t)$

$F_A$

$F_A$

$F_{stat}$

Eingabe:

Rollengewicht

Statische Radlast

Fig. 3

Fig. 4

27    26   30    28

31    32

29

Fig. 5

$F_{max}$    Dynamische
Radlast

Statische
Radlast

$F_{min}$